# FASCICULE DE BREVET EUROPEEN

(11) **EP 0 918 502 B1**
(45) Date de publication et mention de la délivrance du brevet: **10.01.2001**
(21) Numéro de dépôt: 97935595.5
(22) Date de dépôt: 22.07.1997
(51) Int. Cl.: A61G 7/057, G01B 7/14, B32B 15/08

(54) **PRODUIT MULTICOUCHE A COUCHE CENTRALE ELECTRIQUEMENT CONDUCTRICE UTILE COMME ELEMENT DE CAPTEUR INDUCTIF**
MEHRSCHICHTIGES PRODUKT MIT ELEKTRISCH LEITENDER MITTELSCHICHT ZUR VERWENDUNG ALS INAKTIVER SENSOR
MULTILAYER ASSEMBLY WITH A CENTRAL ELECTRICALLY CONDUCTIVE LAYER FOR USE AS AN INDUCTIVE SENSOR ELEMENT

(30) Priorité: 24.07.1996 FR 9609283
(43) Date de publication de la demande: 02.06.1999
(73) Titulaire: HILL-ROM INDUSTRIES S.A., 34100 Montpellier (FR)
(72) Inventeur: MONTANT, Jean-Marc Résidence Las Rébes, F-34080 Montpellier (FR); CAMINADE, Jean-Luc, F-34430 Saint Jean de Vedas (FR)
(74) Mandataire: Portal, Gérard
(86) Numéro de dépôt international: FR9701359
(87) Numéro de publication internationale: WO9803143

(56) Documents cités:
- GB-A- 2 221 035
- US-A- 4 182 981
- US-A- 4 662 521
- US-A- 4 781 958

## Description

La présente invention concerne essentiellement un produit multicouches à couche centrale électriquement conductrice utile comme élément de capteur inductif. Plus particulièrement, l'invention concerne un produit multicouches comprenant une couche centrale électriquement conductrice utile comme élément de capteur inductif dans le cadre d'un procédé et d'un dispositif améliorant le support d'un patient, notamment pour le traitement ou la prévention des escarres.

Le document US-A-4,182,981 décrit un système capacitif comportant des électrodes 24 pour mesurer la forme d'une surface conductrice.

Les documents US-A-4, 886,152;US-A-4,009,312; US-A-4, 734, 303; GB-A- 2,103, 999 et GB-A-1,495, 659 concernent tous des feuilles métalliques multicouches comme matériau d'emballage.

Il est connu par le document EP-A-0 218 301 un procédé et un dispositif améliorant le support d'un patient comprenant un matelas pourvu d'une ou plusieurs chambres fermées remplie(s) d'un fluide sous une pression de remplissage contrôlé, utilisant un dispositif de mesure à l'aide d'une combinaison de deux selfs 24, 25 représentées à la figure 4. Ce dispositif n'est pas très satisfaisant car il nécessite une alimentation électrique de chaque self, donc de la self mobile qui est disposée à proximité du patient, ce qui pose toujours un problème de sécurité.

Par ailleurs, le déposant a décrit dans le document FR-A-2,718,347 = EP-A-676 158, un procédé et un appareil de support d'un élément à supporter, en particulier le corps d'un patient, permettant un support à une profondeur d'enfoncement contrôlée, essentiellement constante à l'aide d'un dispositif de mesure comprenant une self d'induction combinée à une feuille métallique située sous le corps à supporter, la feuille métallique étant déplacée en fonction de l'enfoncement du corps à supporter. Ce déplacement de la feuille métallique modifie le coefficient de self induction de la self en éloignant la fréquence de résonance du circuit LC de la fréquence d'accord de l'oscillateur et entraîne de ce fait un amortissement du signal délivré à un amplificateur par l'oscillateur, afin d'en assurer un traitement correct ou un contrôle adéquat.

Il est à noter que la feuille métallique située sous le corps à supporter est généralement disposée au niveau de la zone de l'élément à supporter d'une plus partie masse ou proéminence, généralement la zone sacrée qui constitue la position la plus basse de l'élément à supporter, par exemple le corps d'un patient.

Dans le cadre de la solution antérieure du déposant, la feuille métallique est située très près de l'élément à supporter, par exemple un patient, et présente l'inconvénient de pouvoir être perçue par celui-ci.

D'autre part, il ne faut pas que la feuille métallique induise un phénomène physique néfaste sur l'élément à supporter, surtout dans le cas du support d'un patient. Egalement, la feuille métallique ne doit pas perturber le traitement du patient.

Ainsi, la présente invention a pour but principal de résoudre le nouveau problème tethnique consistant en la fourniture d'une solution qui permette de réaliser le support d'un élément à supporter, en particulier le corps d'un patient, utilisant un dispositif de mesure de la profondeur d'enfoncement de l'élément à supporter dans un dispositif de support, sans être perçu par l'élément à supporter, en particulier par un patient, et sans induire de perturbations ou phénomènes physiques pouvant être néfastes sur l'élément à supporter, en particulier un patient où une action néfaste sur son traitement est inacceptable.

La présente invention a encore pour but principal de résoudre le nouveau problème technique consistant en la fourniture d'une solution permettant de supporter un élément à supporter, tel que le corps d'un patient avec un dispositif de mesure de la profondeur d'enfoncement de l'élément à supporter dans un dispositif de support, présentant une souplesse permettant de se conformer à la morphologie de l'élément à supporter, en particulier la morphologie du corps d'un patient.

La présente invention a encore pour but principal de résoudre le nouveau problème technique consistant en la fourniture d'une solution qui permette de supporter un élément à supporter avec un dispositif de mesure de la profondeur d'enfoncement de l'élément à supporter dans un dispositif de support utilisant une feuille métallique conçue de manière à présenter une très bonne souplesse ainsi qu'une très bonne résistance mécanique et notamment une résistance à une dégradation de ses caractéristiques électriques.

L'ensemble de ces problèmes techniques est résolu pour la première fois par la présente invention de manière simple, peu coûteuse, sûre et fiable, utilisable à l'échelle industrielle et médicale.

Ainsi, selon un premier aspect, la présente invention concerne l'utilisation d'un produit multicouches sans électrodes, caractérisé en ce qu'il comprend une couche centrale active électriquement conductrice, souple, définissant deux faces principales de grande surface, une première face collée sur au moins une couche support en matière synthétique, avantageusement électriquement isolante, ayant un coefficient d'élasticité sensiblement similaire à celui de la couche centrale active, et une deuxième face collée sur au moins une deuxième couche dite de protection notamment à l'abrasion, en matière synthétique, avantageusement électriquement isolante, l'épaisseur totale du produit multicouches étant prévue pour conserver sensiblement complètement la souplesse de la couche centrale active, comme élément capteur inductif ou dans un dispositif de mesure de la profondeur d'enfoncement d'un élément à support, et par exemple le corps d'un patient, dans un dispositif de support, par exemple un matelas ou équivalent, de préférence la couche de protection est disposée en regard de l'élément à support, par exemple le corps d'un patient. L'invention couvre aussi un produit multicouches tel que précédemment défini mais dans lequel la couche centrale active est de dimension plus petite que la couche support et la couche de protection. De ce fait, la couche centrale ne présente pas de bord susceptible d'être à découvert ou en contact avec l'extérieur. Par exemple, la dimension de la couche centrale est de l'ordre de 600 millimètres multipliée par 600 millimètres et la dimension de la couche de support est de l'ordre de 725 à 975 millimètres multipliés par 1100 à 1400 millimètres et la dimension de la couche de protection est de l'ordre de 700 mm multipliés par 1000 millimètres.

Dans le cadre de la présente description et des revendications, les termes "couche centrale active souple" signifient que la couche centrale présente une souplesse de pliage dans une direction perpendiculaire à la couche sur ses faces principales de grande surface, qui permet de se conformer à la morphologie de l'élément à supporter, en particulier la morphologie du corps d'un patient. Egalement, par les termes "couche centrale active électriquement conductrice, dans la présente description et les revendications, on entend une couche centrale qui soit conductrice de l'électricité, quel que soit son mode de réalisation. Avantageusement, l'épaisseur de la couche centrale souple, électriquement conductrice, est d'au moins 15 µm.

Selon un mode de réalisation avantageux, l'épaisseur de la couche centrale souple électriquement conductrice est comprise entre environ 20 et environ 40 µm, mieux entre environ 25 et environ 35 µm, en particulier environ 30 µm.

Selon un autre mode de réalisation avantageux de l'invention, l'épaisseur de la couche support est comprise entre environ 10 µm et environ 15 µm. De préférence, cette couche support comprend ou est constituée de polyester.

Selon un mode de réalisation avantageux, la couche support est métallisée sur au moins une face destinée à être disposée en regard de la couche centrale électriquement conductrice. De préférence, la métallisation est réalisée en un métal ou alliage de métal compatible avec un métal ou un alliage de métaux procurant le caractère électriquement conducteur à la couche centrale active.

Selon un mode de réalisation actuellement préféré, la couche centrale active électriquement conductrice comprend ou est constituée d'au moins une feuille d'aluminium qui peut être d'une épaisseur d'environ 30 µm. Dans ce cas, il est actuellement souhaité que la métallisation de la couche support soit réalisée avec un métal ou un alliage choisi parmi l'argent, l'aluminium ou une combinaison des deux. L'épaisseur de la métallisation n'est pas critique mais sa fonction est d'assurer une bonne liaison contre la couche support et la couche centrale active. L'épaisseur de la métallisation sera généralement de l'ordre de 1 µm ou de quelques microns.

Selon une autre variante de réalisation de l'invention, l'épaisseur de la couche dite de protection peut être comprise avantageusement entre environ 20 et environ 40 µm, mieux entre environ 20 et environ 30 µm. Cette couche de protection peut comprendre ou être constituée de polyester. Dans le cas du polyester, l'épaisseur de la couche de protection sera également d'environ 25 µm.

Selon une autre caractéristique avantageuse de l'invention, le collage entre les couches est réalisé avec un adhésif qui présente une force de collage qui rend au produit multicouches une résistance mécanique suffisamment longue pour ne pas nécessiter le changement du produit multicouches alors que l'élément à supporter est sur le support, en particulier pour ne pas nécessiter un changement lorsqu'un patient est en traitement sur un lit. De préférence, l'adhésif utilisé doit avantageusement procurer une capacité d'adhérence rendant les couches indécollables sans déchirement. De nombreux adhésifs ayant cette capacité existent dans le commerce. On préfère actuellement un adhésif de type acrylique.

Il est également avantageux dans le cadre de l'invention que l'adhésif soit pré-encollé ou pré-adhésivé, par exemple sur une face de la couche active et sur une face de la couche de protection de manière à faciliter l'assemblage des couches.

Dans ce cadre, le procédé de fabrication du produit multicouches est particulièrement simple et consiste simplement à coller d'une part la couche centrale active comportant une face pré-adhésivée sur la couche de support, et la couche de protection ayant une face pré-adhésivée sur l'autre face restante de la couche centrale active en exerçant une pression de collage dépendant de l'adhésif utilisé et en laissant prendre l'adhésif pendant une période de temps suffisante, généralement préconisée par le fabriquant de l'adhésif. Il est avantageux d'utiliser des couches présentant les dimensions requises pour le produit multicouches ce qui évite tout découpage ultérieur.

On obtient ainsi un produit multicouches qui peut constituer un élément de capteur inductif et d'autre part, on peut également utiliser ce produit multicouches pour constituer l'un des éléments d'un dispositif de mesure de la distance d'enfoncement dans un dispositif de support, par exemple un matelas, d'un élément à supporter, par exemple le corps d'un patient, ce qui constitue actuellement l'application préférée de l'invention.

Ainsi, selon un deuxième aspect, la présente invention couvre aussi un élément de capteur inductif, caractérisé en ce qu'il comprend un produit multicouches tel que précédemment défini.

Selon un troisième aspect, la présente invention couvre aussi un dispositif de mesure de la profondeur d'enfoncement d'un élément à supporter, en particulier le corps d'un patient, dans un dispositif de support, par exemple un matelas ou équivalent notamment un dispositif de support comprenant au moins une chambre fermée ou à échappement contrôlé, souple, gonflable sous une pression de gonflage initiale prédéterminée réglable.

Selon un cinquième aspect, la présente invention couvre également un procédé et un appareil de prévention ou de traitement des escarres, caractérisé en ce qu'il comprend un produit multicouches tel que précédemment défini.

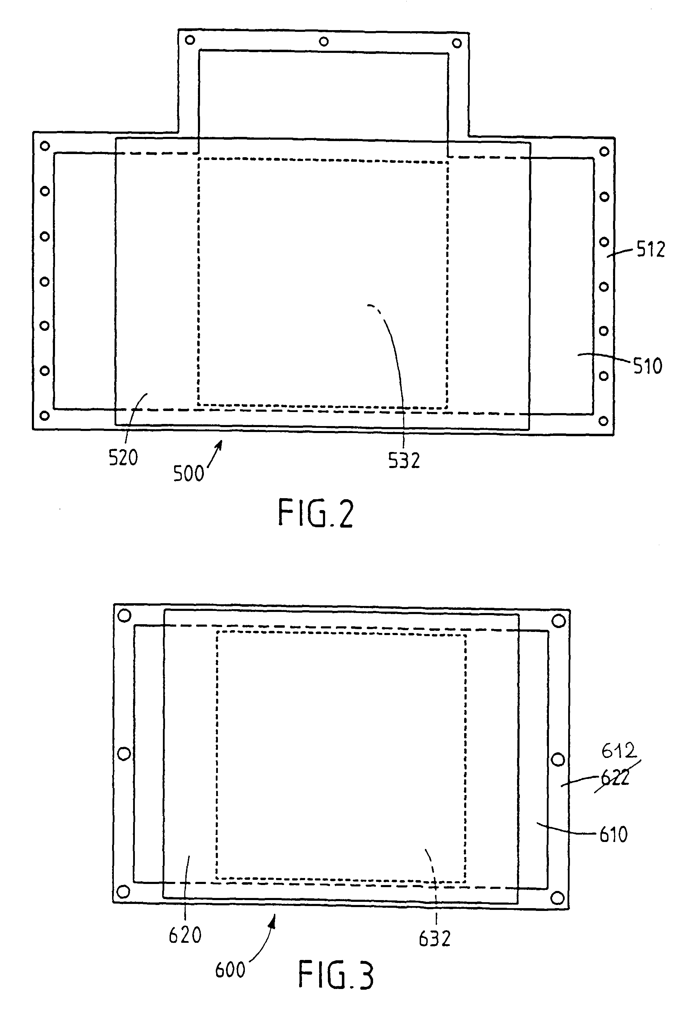

Dans le cadre de ce cinquième aspect, la présente invention couvre en particulier un appareil de support d'un élément à supporter en particulier un patient P, comprenant un dispositif de mesure pour mesurer le positionnement d'un élément supporté par un dispositif de support déformable et une déformation corrélée du dispositif de support déformable résultant de l'action dudit élément agissant sur ledit dispositif de support en relation avec le volume et la forme dudit élément supporté, ledit dispositif de mesure comprenant un film souple, flexible d'une feuille mince métallique déplaçable et déformable dans l'espace soumise à un déplacement et une déformation à mesurer, en relation avec le mouvement et la déformation du dispositif de support déformable, causés par ledit élément supporté, caractérisé en ce que ledit film souple, flexible d'une feuille mince métallique précité comprend ou est constitué d'un produit multicouches tel que précédemment défini ou tel que défini dans la description suivante en référence aux figures 2 et 3. Lorsque l'élément à supporter est de préférence un patient, le dispositif de support déformable précité est en général un matelas.

Sur une caractéristique avantageuse de l'invention, ce dispositif de support déformable comprend alors généralement au moins une chambre fermée gonflée ou dégonflée par introduction ou échappement d'un fluide, par exemple de l'air, comprenant une face supérieure et une face inférieure, ledit film souple, déformable d'une feuille mince métallique étant lié à ladite face supérieure de la chambre et un élément de mesure de préférence variateur d'impédance étant lié à ladite face inférieure de ladite chambre. Cet élément variateur d'impédance est de préférence une self d'induction.

Selon un autre mode de réalisation particulièrement avantageux l'invention, ledit appareil comprend aussi des moyens de contrôle agissant sur des moyens d'asservissement de la pression de gonflage de la chambre pour maintenir, au cours du support, la position mesurée séparant la face supérieure de la face inférieure de la chambre de préférence à une valeur de distance prédéterminée, par exemple essentiellement constante, c'est-à-dire essentiellement égale à, ou dans une variation acceptable, relativement à une distance de consigne Dc. Ici, la position représente la distance mesurée séparant le point le plus près de la feuille métallique mince déformée liée à la face supérieure de la chambre, relativement à la face inférieure.

Selon une variante de réalisation avantageuse, les moyens de contrôle comprennent une centrale de commande comprenant une unité centrale électronique ou électromécanique, liée à une mémoire qui reçoit en permanence ou par intermittence des signaux proportionnels à la valeur de position mesurée Dm, transmis par les moyens de mesure précités, et qui comparent les valeurs de positions mesurées Dm avec la valeur de position de consigne Dc, la centrale de commande commande en outre des moyens d'asservissement de la pression de gonflage de la chambre pour aboutir en permanence à une position mesurée Dm essentiellement égale à, ou dans une variation acceptable relativement à la distance de consigne Dc.

Selon un mode de réalisation particulièrement préféré, le dispositif de support est un matelas anti-escarres.

D'autres buts, caractéristiques et avantages de l'invention apparaîtront clairement à la lumière de la description explicative qui va suivre faite en référence à deux modes de réalisation actuellement préférés de l'invention donnés simplement à titre d'illustration et qui ne sauraient donc en aucune façon limiter la portée de l'invention. Dans les dessins :
- la figure 1 représente schématiquement un mode de réalisation d'un appareil de support tel que décrit à la figure 2 du document antérieur du déposant FR-A-2,718,347 = EP-A-676 158 ;
- la figure 2 représente le premier mode de réalisation d'un produit multicouches selon la présente invention à couche centrale active souple, électriquement conductrice, représentée en pointillés, par exemple utilisable pour un dispositif de support à chambre unique ; et
- la figure 3 représente un deuxième mode de réalisation d'un produit multicouches selon la présente invention utilisable avec un élément de support à au moins une chambre.

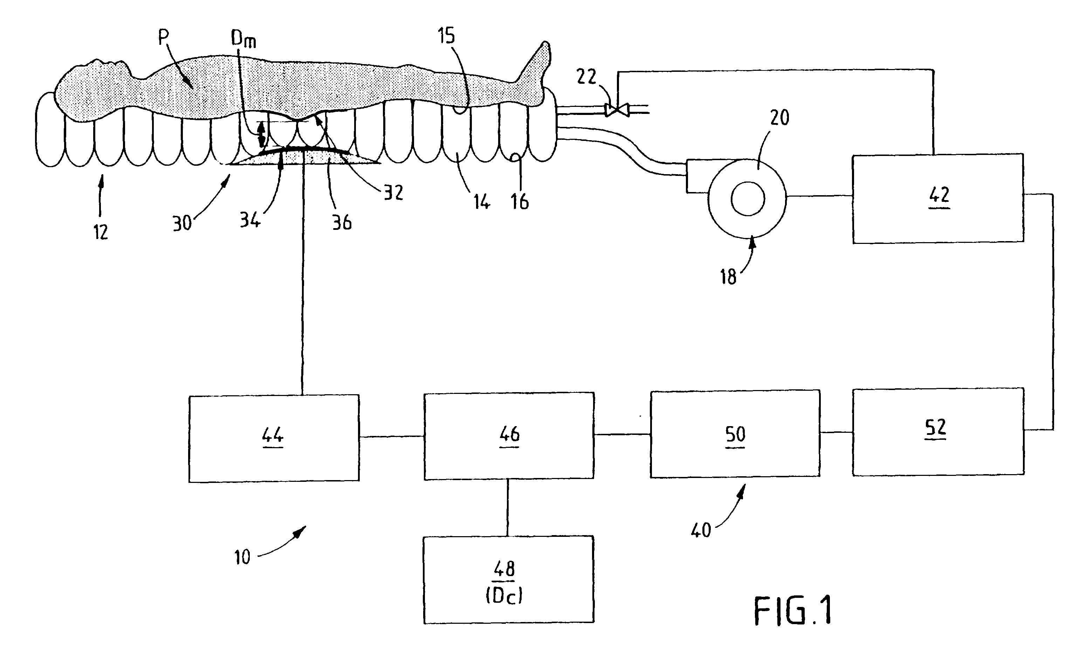

En référence à la figure 1, un appareil de support de l'art antérieur, selon le document FR-A-2,718,347 = EP-A-676 158, est représenté par le numéro de référence général 10. Cet appareil de support permet de supporter un élément, en particulier comme représenté, le corps d'un patient P.

Cet appareil 10 comprend un dispositif de support proprement dit 12, par exemple un matelas, comprenant au moins une chambre fermée ou à échappement contrôlé 14, souple, gonflable, pouvant par exemple être composé d'unc multiplicité de boudins gonflables communiquant entre eux, ladite chambre 14 étant gonflable sous une pression de gonflage initiale prédéterminée, réglable. Cette chambre 14 présente une face supérieure 15 servant de support de l'élément à supporter P, une face inférieure 16 qui peut, par exemple, reposer sur un sommier (ici non représenté) ou moyen équivalent. L'appareil comprend également des moyens 18 d'asservissement de la pression de remplissage de la chambre 14 en fonction de la distance d'enfoncement dans le dispositif support de l'élément à supporter, par exemple comprenant des moyens de remplissage 20, tels que des moyens de pompage 20, d'un fluide de remplissage de la chambre 14, tel qu'un gaz, en particulier l'air, ou un liquide, en particulier de l'eau, et des moyens d'évacuation tels qu'une vanne 22.

Cet appareil comprend aussi des moyens 30 de mesure de distance D séparant la face supérieure 15 de la chambre 14 relativement à la face inférieure 16.

Ces moyens de mesure 30 comprennent un élément métallique 32, avantageusement sous forme d'une feuille mince, solidaire de la face supérieure 15 de la chambre 14, ici à l'intérieur de la chambre 14, coopérant avec au moins un élément inductif 34 formant détecteur de position, solidaire de la face inférieure 16 de ladite chambre 14 qui peut être disposé à l'intérieur de la chambre, intégrée à la face inférieure de la chambre 14, ou solidarisée extérieurement à la face inférieure 16 de la chambre 14, comme représenté.

L'appareil comprend aussi des moyens de contrôle 40 agissant sur les moyens 18 d'asservissement de la pression de gonflage de la chambre 14 pour maintenir, au cours du support, la position D mesurée séparant la face supérieure 15 de la face inférieure 16 de la chambre 14 de préférence à une valeur de distance prédéterminée par exemple essentiellement constante, c'est-à-dire essentiellement égale à, ou dans une variation acceptable, relativement à une distance de consigne Dc.

Les moyens de contrôle 40 peuvent avantageusement comprendre une centrale de commande 42 comprenant une unité centrale électronique ou électromécanique ayant une mémoire qui reçoit en permanence ou par intermittence des signaux proportionnels à la valeur de la position mesurée Dm, transmis par les moyens de mesure 30 précités, et qui comparent les valeurs de distance mesurées Dm avec la valeur de distance de consigne Dc. La centrale de commande 42 commande les moyens 20, 22 d'asservissement de la pression de gonflage de la chambre 14 pour aboutir en permanence à une distance mesurée Dm, essentiellement égale à, ou dans une variation acceptable, relativement à la distance de consigne Dc.

Ces moyens de commande 40 sont décrits en détail dans le document précédent du déposant FR-A-2,718,347 = EP-A-676 158, en référence aux figures 1 à 4 et 6 et dans la description qui s'y rapporte.

Les moyens de contrôle 40 peuvent comprendre un dispositif oscillateur 44 qui est représenté en détail à la figure 3 de FR-A-2,718,347 = EP-A-676,158, couplé à l'élément inductif 34, tel qu'une bobine d'induction, ou self, un dispositif amplificateur 46 dont l'amplification peut être réglée par un dispositif de réglage de consigne 48 définissant la distance de consigne Dc. L'amplificateur 46 est ensuite couplé à un dispositif de régulation proportionnelle intégrale 50 couplé à un dispositif adaptateur 52 dont la sortie est couplée à la centrale de commande 42.

Dans l'exemple de réalisation de la figure 1, l'élément inductif 34 tel qu'une bobine ou self d'induction est par exemple disposé sur un élément de renforcement 36 positionné au niveau de la zone de l'élément à supporter P d'une plus grande masse ou proéminence, ici la zone du sacrum du patient P comme cela est aussi expliqué dans le document antérieur du déposant précité.

Dans le cadre de ce document antérieur du déposant, la feuille métallique 32 présentait une épaisseur de 10 µm et était disposée entre deux feuilles isolantes de façon à accroître la sensibilité, voir page 9, lignes 26 à 30 de FR-A-2,718,347 qui était satisfaisante.

Cependant, dans le cadre de la présente invention, l'inventeur s'est posé le nouveau problème technique de vouloir fournir une solution qui permette d'éviter ou de minimiser la perception par un élément à supporter, en particulier un patient, de la présence de la feuille métallique.

Egalement, dans le cadre de la présente invention, l'inventeur s'est posé le nouveau problème technique de vouloir éviter toute perturbation physique relativement à l'élément à supporter, surtout dans le cas du traitement d'un patient, qui pourrait être induite par la feuille métallique.

D'autre part, dans le cadre de la présente invention, l'inventeur s'est encore posé le nouveau problème technique consistant à trouver une solution qui permette d'obtenir une très bonne souplesse de la feuille métallique tout en améliorant grandement sa résistance mécanique et tout en évitant en outre une dégradation en cours de fonctionnement.

L'ensemble de ces problèmes techniques a été résolu pour la première fois d'une manière simple, sûre et fiable par la présente invention et qui fait l'objet des deux modes de réalisation actuellement préférés de l'invention en référence respectivement aux figures 2 et 3.

Ainsi, en référence à la figure 2, l'invention concerne en tant que produit nouveau, un produit multicouches représenté par le numéro de référence général 500. Ce produit multicouches 500 est caractérisé en ce qu'il comprend :
- une couche centrale active 532 souple qui a la même fonction que l'élément métallique 32 présentant une forme de feuille métallique, décrit dans le document antérieur du déposant notamment en référence aux figures 1 et 2, cette couche centrale active 532 est donc électriquement conductrice et peut être, par exemple, constituée d'une feuille métallique, présentant dans le cadre de la présente invention une épaisseur d'au moins 15 µm, définissant deux faces principales de grande surface, comme cela est bien compréhensible en raison généralement de la réalisation en forme de feuille, une première face collée sur au moins une couche dite de support 510 en matière synthétique, électriquement isolante, représentée ici de plus grande dimension, ayant avantageusement un coefficient d'élasticité sensiblement similaire à celui de la couche centrale active 532 ; et une deuxième face collée sur au moins une deuxième couche dite de protection, notamment à l'abrasion, 520, en matière synthétique, électriquement isolante, l'épaisseur totale du produit multicouches étant prévue pour conserver sensiblement complètement la souplesse de la couche centrale active 532. Avantageusement, la deuxième couche dite de protection présente aussi un coefficient d'élasticité sensiblement similaire à celui de la couche centrale active 532.

Avantageusement, l'épaisseur de la couche centrale active 532 est comprise entre environ 20 et environ 40 µm, mieux entre environ 25 et environ 35 µm.

Un mode de réalisation actuellement préféré de la couche centrale active est une feuille d'aluminium et dans ce cas l'épaisseur actuellement idéale est d'environ 30 µm.

Selon une autre variante de réalisation avantageuse de l'invention, l'épaisseur de la couche de support 510 est comprise entre environ 10 µm et environ 15 µm.

Selon un mode de réalisation actuellement préféré, la couche de support 510 comprend ou est constituée de polyester.

Selon une autre variante de réalisation avantageuse de l'invention, la couche de support 510 peut être métallisée sur au moins une face destinée à être disposée en regard de la couche centrale 532. La métallisation de la couche support 510 est avantageusement réalisée avec un métal ou un alliage de métal compatible avec le métal utilisé pour rendre la couche centrale 532 électriquement conductrice. Dans le cas où la couche centrale 532 est réalisée en aluminium, la métallisation de la couche support 510 est avantageusement réalisée en un métal ou un alliage choisi parmi l'argent et l'aluminium ou une combinaison des deux.

Selon une autre variante de réalisation avantageuse de l'invention, l'épaisseur de la couche de protection 520 est comprise entre environ 20 et environ 40 µm, mieux entre environ 20 et environ 30 µm.

Selon une variante de réalisation avantageuse, la couche de protection comprend ou est constituée en polyester et l'épaisseur est alors actuellement idéalement d'environ 25 µm.

Selon une autre caractéristique avantageuse de l'invention, le collage entre la couche centrale active 532 et les couches respectivement de support 510 et de protection 520 est réalisé à l'aide d'un adhésif ayant une force de collage qui procure au produit multicouches une résistance mécanique élevée. De préférence, l'adhésif présente une capacité d'adhérence rendant la couche centrale 532 indécollable sans déchirement. De nombreux adhésifs sont disponibles dans le commerce et il est actuellement préféré un adhésif de type acrylique.

Selon un mode de réalisation avantageux, la couche centrale active 532 est pré-adhésivée ainsi que la couche de protection 520, ce qui facilite le collage des trois couches entre elles et la fabrication du produit multicouches.

Par exemple, la dimension du produit multicouches est la suivante : pour la couche centrale 532, celle-ci présente par exemple une dimension de 600 mm x 600 mm, constituée par une feuille d'aluminium d'environ 30 µm d'épaisseur ; la couche de support 510 est par exemple réalisée en polyester et présente une dimension de 1400 mm x 975 mm, et une épaisseur de 13 µm, cette couche de support étant destinée à être positionnée à l'opposé de l'élément à supporter, tel que le corps d'un patient, par exemple sur l'endroit le plus approprié de l'élément de support 12 représenté à la figure 1, par exemple la zone correspondant généralement à la zone de sacrum ; la couche de protection 520, par exemple en polyester, présente une dimension de 1000 mm x 700 mm et une épaisseur de 25 µm et est destinée à être positionnée en regard de l'élément à supporter, par exemple ici le corps d'un patient P. Naturellement, ces dimensions sont données simplement à titre d'illustration.

Ce produit multicouches peut être combiné à un ruban adhésif 512 qui permet de fixer le produit multicouches avec la couche de protection en regard de l'élément à supporter, tel que le corps d'un patient P, à l'endroit recherché de l'élément de support 12 représenté à la figure 1.

Le produit multicouches selon la présente invention peut ainsi être utilisé comme élément de capteur inductif ayant la fonction du capteur 32 dans le cadre du procédé et dc l'appareil tel que décrit dans le document antérieur du déposant en référence à la figure 1 ; ainsi que comme l'un des composants d'un dispositif de mesure tel que le dispositif de mesure 34 décrit dans le cadre du document antérieur du déposant, et en référence à la figure 1 qui s'applique donc entièrement à la présente invention.

Un deuxième mode de réalisation d'un produit multicouches selon la présente invention est représenté en référence à la figure 3. De ce fait, les éléments identiques présentent les mêmes numéros de référence mais augmentés de 100. Par exemple, la couche centrale active souple a le numéro de référence 632, la couche de support porte le numéro de référence 610 et la couche de protection le numéro de référence 620. Les dimensions peuvent, par exemple, être pour la couche centrale active 632 une feuille d'aluminium de 600 mm x 600 mm et 30 µm d'épaisseur, c'est-à-dire des dimensions inchangées ; pour la couche de support 610 une couche de polyester par exemple d'épaisseur environ 13 µm métallisée sur la face en regard de la couche métallique 632 avec de l'argent d'une dimension de 1100 mm x 725 mm et la couche de protection 620 peut être réalisée en polyester ayant une épaisseur de 25 µm et d'une dimension de 1 000 mm x 700 mm. De même, un ruban adhésif 612 peut être prévu pour réaliser la liaison à l'élément de support 12 du produit multicouches 600 avec la couche de protection 620 en regard de l'élément à supporter, tel que le corps d'un patient P.

Grâce au produit multicouches de la présente invention, on résout l'ensemble des problèmes techniques précédemment énoncés. En particulier, il est assuré une bonne protection de la couche centrale active. En outre, le patient ne perçoit généralement plus l'existence de l'élément métallique formant capteur d'induction. La souplesse du produit multicouches permet une adaptation parfaite à la morphologie de l'élément à supporter, en particulier le corps d'un patient. Ce produit multicouches présente donc une très bonne souplesse et une très bonne résistance mécaniquement notamment une très bonne résistance à une dégradation en cours de fonctionnement. Il existe pratiquement aucune possibilité de délaminage en usage normale du produit multicouches en éliminant ainsi tout risque d'abrasion ou de dégradation de la partie active. En outre, grâce à la présence de la métallisation de la couche support, on obtient un comportement attendu de l'élément de capteur inductif avec une meilleure compatibilité électromagnétique en terme d'immunité au rayonnement.

Ainsi, l'invention procure un avantage déterminant dans le cadre des dispositifs de mesure de la profondeur d'enfoncement d'un élément à supporter, tel que le corps d'un patient P, dans un élément de support 12, tel qu'un matelas à au moins une chambre souple, gonflable à une pression de gonflage prédéterminée réglable, comme cela est bien compréhensible à un homme de l'art à partir de la description de la présente invention et en relation avec le document précédent du déposant FR-A-2,718,347 = EP-A-676 158.

Naturellement, l'invention couvre toute caractéristique qui apparaît être nouvelle par rapport à un état technique quelconque. Egalement, l'invention comprend tous les moyens constituant des équivalents techniques des moyens décrits et représentés. En outre, les figures 2 et 3 font partie intégrante de la présente invention et donc de la présente description.

## Revendications

1. Utilisation d'un produit multicouches sans électrodes, caractérisé en ce qu'il comprend une couche centrale active (532 ; 632) souple, électriquement conductrice comprenant deux faces principales de grande surface, une première face collée sur au moins une couche dite de support (510 ; 610) en matière synthétique, avantageusement électriquement isolante, ayant un coefficient d'élasticité sensiblement similaire à celui de la couche centrale active (532 ; 632) et une deuxième face collée sur au moins une deuxième couche dite de protection (520 ; 620) notamment à l'abrasion, en matière synthétique, avantageusement électriquement isolante, l'épaisseur totale du produit multicouches étant prévue pour conserver sensiblement complètement la souplesse de la couche centrale active (532 ; 632) ; comme élément de capteur inductif dans un dispositif de mesure de la profondeur d'enfoncement d'un élément à supporter, par exemple le corps d'un patient, dans un élément de support, par exemple un matelas ou équivalent, de préférence la couche de protection étant disposée en regard de l'élément à supporter, par exemple le corps d'un patient.

2. Utilisation selon la revendication 1, caractérisée en ce que l'épaisseur de la couche centrale (532 ; 632) est au moins d'environ 15 µm et avantageusement est comprise entre environ 20 et environ 40 µm, mieux entre environ 25 et environ 35 µm.

3. Utilisation selon la revendication 1 ou 2, caractérisée en ce que l'épaisseur de la couche support (510 ; 610) est comprise entre environ 10 µm et environ 15 µm.

4. Utilisation selon l'une des revendications 1 à 3, caractérisée en ce que la couche support (510 ; 610) comprend ou est constituée de polyester.

5. Utilisation selon l'une des revendications 1 à 4, caractérisée en ce que la couche support (510 ; 610) est métallisée sur au moins une face destinée à être disposée en regard de la couche centrale active (532 ; 632).

6. Utilisation selon la revendication 5, caractérisée en ce que la métallisation de la couche support (510 ; 610) est réalisée avec un métal ou un alliage compatible avec le métal de la couche centrale active (532 ; 632).

7. Utilisation selon la revendication 5 ou 6, caractérisée en ce que la couche centrale active (532 ; 632) comprend une feuille d'aluminium ou d'un alliage d'aluminium et la métallisation de la couche support est réalisée avec un métal ou un alliage choisi parmi l'argent et l'aluminium ou une combinaison des deux.

8. Utilisation selon l'une des revendications précédentes, caractérisée en ce que l'épaisseur de la couche de protection (520 ; 620) est, comprise entre environ 20 et environ 40 µm, mieux entre environ 20 et environ 30 µm.

9. Utilisation selon l'une des revendications précédentes, caractérisée en ce que la couche de protection (520 ; 620) comprend ou est constituée de polyester.

10. Utilisation selon l'une quelconque des revendications précédentes, caractérisée en ce que ie collage précité est réalisé avec un adhésif ayant une force de collage qui procure au produit multicouche une bonne résistance mécanique, de préférence qui procure une capacité d'adhérence rendant le produit multicouches indécollable sans déchirement de la couche centrale active.

11. Utilisation selon la revendication 10, caractérisée en ce que l'adhésif précité est de type acrylique.

12. Utilisation selon l'une quelconque des revendications précédentes, caractérisée en ce que le produit multicouches est obtenu par collage de la couche centrale active (532 ; 632) pré-adhésivée sur une couche de support comportant une face métallisée ; et d'une couche de protection également pré-adhésivée sur la face destinée à être collée sur la couche centrale active.

13. Produit multicouches sans électrodes utilisable comme élément de capteur inductif dans un dispositif de mesure de la profondeur d'enfoncement d'un élément à supporter, par exemple le corps d'un patient, dans un élément de support, par exemple un matelas ou équivalent, caractérisé en ce qu'il comprend une couche centrale active (532 ; 632) souple, électriquement conductrice comprenant deux faces principales de grande surface, une première face collée sur au moins une couche dite de support (510 ; 610) en matière synthétique, avantageusement électriquement isolante, ayant un coefficient d'élasticité sensiblement similaire à celui de la couche centrale active (532 ; 632) et une deuxième face collée sur au moins une deuxième couche dite de protection (520 ; 620) notamment à l'abrasion, en matière synthétique, avantageusement électriquement isolante, l'épaisseur totale du produit multicouches étant prévue pour conserver sensiblement complètement la souplesse de la couche centrale active (532 ; 632) ; ladite couche centrale active (532 ; 632) étant de dimension plus petite que la dimension de la couche de support (510 ; 610) et la couche de protection (520 ; 620).

14. Produit multicouches selon la revendication 13, caractérisé en ce que la couche support (510 ; 610) est métallisée sur au moins une face destinée à être disposée en regard de la couche centrale active (532 ; 632) ; ladite métallisation étant réalisée avec un métal ou un alliage compatible avec le métal de la couche centrale active (532 ; 632) ; ladite couche centrale active (532 ; 632) étant de préférence une feuille d'aluminium ou d'un alliage d'aluminium et la métallisation de la couche support étant de préférence réalisée avec un métal ou un alliage choisi parmi l'argent et l'aluminium ou une combinaison des deux.

15. Produit multicouches selon la revendication 13 ou 14, caractérisé en ce que la couche centrale active (532 ; 632) est constituée par une feuille d'aluminium d'environ 30 µm d'épaisseur ayant une dimension de 600 mm x 600 mm ; la couche de support (510 ; 610) est constituée par une couche de polyester d'épaisseur d'environ 13 µm et présentant une dimension de 1100 mm à 1400 mm x 975 mm à 725 mm, de préférence métallisée sur la face en regard de la couche métallique (532 ; 632) avec de l'argent ; la couche de protection (520 ; 620) étant constituée par une couche de polyester ayant une épaisseur d'environ 25 µm et ayant une dimension de 1000 mm x 700 mm, un ruban adhésif (612) pouvant être prévu pour réaliser la liaison de ce produit multicouches à un élément de support (12) avec la couche de protection (620) en regard de l'élément à support, tel que le corps d'un patient P.

16. Elément de capteur inductif ou dispositif de mesure de la profondeur d'enfoncement d'un élément à supporter, en particulier le corps d'un patient, dans un dispositif de support, par exemple un matelas ou équivalent notamment un dispositif de support comprenant au moins une chambre fermée ou à échappement contrôlé, souple, gonflable sous une pression de gonflage initiale prédéterminée réglable, caractérisé en ce qu'il comprend un produit multicouches tel que défini à l'une quelconque des revendications précédentes.

17. Appareil de prévention ou traitement des escarres, caractérisé en ce qu'il comprend un produit multicouches tel que défini à l'une quelconque des revendications 1 à 15 ou un élément de capteur inductif ou dispositif de mesure de la profondeur d'enfoncement d'un élément à supporter selon la revendication 16..

18. Appareil selon la revendication 17, caractérisé en ce que ledit support est un matelas (12) comprenant au moins une chambre fermée ou à échappement contrôlé (14) souple, gonflable, gonflée ou dégonflée par introduction ou échappement d'un fluide, par exemple de l'air, comprenant une face supérieure (15) et une face inférieure (16), le produit multicouche précité étant lié à la face supérieure de ladite chambre (14), ledit appareil comprenant en outre des moyens de contrôle (40) agissant sur des moyens (18) d'asservissement de la pression de gonflage de la chambre (14) pour maintenir, au cours du support, une position D mesurée séparant la face supérieure (15) de la face inférieure (16) de la chambre (14) de préférence à une valeur de distance prédéterminée, par exemple essentiellement constante, c'est-à-dire essentiellement égale à, ou dans une variation acceptable, relativement à une distance de consigne Dc.

19. Appareil selon la revendication 18, caractérisé en ce que les moyens de contrôle (40) comprennent une centrale de commande (42) comprenant une unité centrale électronique ou électromécanique et ayant une mémoire qui reçoit en permanence ou par intermittence des signaux proportionnels à la valeur de position mesuré Dm, transmise par des moyens de mesure (30), et qui comparent les valeurs de position mesurée Dm avec la valeur de position de consigne Dc, la centrale de commande (42) commandant en outre les moyens (18) d'asservissement de la pression de gonflage de la chambre pour aboutir en permanence à une position mesurée Dm essentiellement égale à, ou dans une variation acceptable relativement à la distance de consigne Dc.

20. Appareils selon une des revendications 18 et 19, caractérisé en ce que le produit multicouches précité est disposé au niveau de la zone du sacrum du patient P, les moyens de mesure (30) comprenant un élément conducteur d'impédance (34) tel qu'une bobine d'induction ou self, lié à la face inférieure (15) de la chambre (14) en regard du produit multicouches.

## Patentansprüche

1. Verwendung eines mehrschichtigen Produktes ohne Elektroden, das dadurch gekennzeichnet ist, dass es eine nachgiebige elektrisch leitfähige aktive Mittelschicht (532; 632) aufweist, die zwei Hauptseiten mit großer Oberfläche aufweist, wobei eine erste Seite auf zumindest einer Trägerschicht (510; 610) aus synthetischem, vorzugsweise elektrisch isolierendem Material mit einem Elastizitätskoeffizienten, der im Wesentlichen ähnlich dem der aktiven Mittelschicht (532; 632) ist, angeklebt ist, und eine zweite Seite auf zumindest einer zweiten Schicht, einer Schutzschicht, insbesondere gegen Verschleiß, aus synthetischem, vorzugsweise elektrisch isolierendem Material angeklebt ist, wobei die Gesamtdicke des mehrschichtigen Produktes vorgesehen ist, um die Nachgiebigkeit der aktiven Mittelschicht (532; 632) im Wesentlichen vollständig beizubehalten; als induktives Sensorelement in einer Vorrichtung zur Messung der Einsinktiefe eines zu tragenden Elementes, beispielsweise des Körpers eines Patienten, in einem Trägerelement, beispielsweise einer Matratze oder dergleichen, wobei vorzugsweise die Schutzschicht gegenüber dem zu tragenden Element, beispielsweise dem Körper eines Patienten, vorgesehen ist.

2. Verwendung nach Anspruch 1, dadurch gekennzeichnet, dass die Dicke der Mittelschicht (532; 632) zumindest etwa 15 µm und vorzugsweise zwischen etwa 20 und etwa 40 µm, insbesondere zwischen etwa 25 und etwa 35 µm, beträgt.

3. Verwendung nach Anspruch 1 oder 2, dadurch gekennzeichnet, dass die Dicke der Trägerschicht (510; 610) zwischen etwa 10 µm und etwa 15 µm beträgt.

4. Verwendung nach einem der Ansprüche 1 bis 3, dadurch gekennzeichnet, dass die Trägerschicht (510; 610) Polyester umfasst oder aus Polyester besteht.

5. Verwendung nach einem der Ansprüche 1 bis 4, dadurch gekennzeichnet, dass die Trägerschicht (510; 610) auf zumindest einer Seite, die dazu vorgesehen ist, gegenüber der aktiven Mittelschicht (532; 632) angeordnet zu werden, metallisiert ist.

6. Verwendung nach Anspruch 5, dadurch gekennzeichnet, dass die Metallisierung der Trägerschicht (510; 610) mit einem Metall bzw. einer Legierung realisiert ist, das bzw. die mit dem Metall der aktiven Mittelschicht (532; 632) kompatibel ist.

7. Verwendung nach Anspruch 5 oder 6, dadurch gekennzeichnet, dass die aktive Mittelschicht (532; 632) eine Folie aus Aluminium oder einer Aluminiumlegierung aufweist und die Metallisierung der Trägerschicht mit einem Metall oder einer Legierung, ausgewählt aus Silber und Aluminium oder einer Kombination der beiden, realisiert ist.

8. Verwendung nach einem der vorhergehenden Ansprüche, dadurch gekennzeichnet, dass die Dicke der Schutzschicht (520; 620) zwischen etwa 20 und etwa 40 µm, vorzugsweise zwischen etwa 20 und etwa 30 µm, beträgt.

9. Verwendung nach einem der vorhergehenden Ansprüche, dadurch gekennzeichnet, dass die Schutzschicht (520; 620) Polyester umfasst oder aus Polyester besteht.

10. Verwendung nach einem der vorhergehenden Ansprüche, dadurch gekennzeichnet, dass das genannte Ankleben mit einem Adhäsiv realisiert ist, das eine Haftkraft aufweist, die dem mehrschichtigen Produkt eine gute mechanische Widerstandsfähigkeit verleiht, vorzugsweise ein solches Haftvermögen verleiht, dass das mehrschichtige Produkt nicht ohne zu zerreißen von der aktiven Mittelschicht trennbar ist.

11. Verwendung nach Anspruch 10, dadurch gekennzeichnet, dass das genannte Adhäsiv acrylisch ist.

12. Verwendung nach einem der vorhergehenden Ansprüche, dadurch gekennzeichnet, dass das mehrschichtige Produkt durch Ankleben der im vorhinein mit einem Adhäsiv ausgerüsteten aktiven Mittelschicht (532; 632) auf eine Trägerschicht mit einer metallisierten Fläche; und einer Schutzschicht, die ebenfalls im vorhinein auf der Seite, die dazu vorgesehen ist, auf der aktiven Mittelschicht angeklebt zu werden, mit einem Adhäsiv ausgerüstet ist, erhalten ist.

13. Mehrschichtiges Produkt ohne Elektroden, verwendbar als induktives Sensorelement in einer Vorrichtung zur Messung der Einsinktiefe eines zu tragenden Elementes, beispielsweise des Körpers eines Patienten, in einem Trägerelement, zum Beispiel einer Matratze oder dergleichen, dadurch gekennzeichnet, dass es eine elektrisch leitfähige aktive nachgiebige Mittelschicht (532; 632) aufweist, die zwei Hauptseiten mit grober Oberfläche aufweist, wobei eine erste Seite auf zumindest einer Trägerschicht (510; 610) aus synthetischem, vorzugsweise elektrisch isolierendem Material, mit eine Elastizitätskoeffizienten, der im Wesentlichen dem der aktiven Mittelschicht (532; 632) gleich ist, angeklebt ist und eine zweite Seite auf zumindest einer zweiten Schicht (520; 620), eine Schutzschicht, insbesondere gegen Verschleiß, aus sysnthetischem, vorzugsweise elektrisch isolierendem Material angeklebt ist, wobei die Gesamtdicke des mehrschichtigen Produktes vorgesehen ist, um die Nachgiebigkeit der aktiven Mittelschicht (532; 632) im Wesentlichen vollständig beizubehalten, wobei die Dimension der aktiven Mittelschicht (532; 632) kleiner ist als die Dimension der Trägerschicht (510; 610) und der Schutzschicht (520; 620).

14. Mehrschichtiges Produkt nach Anspruch 13, dadurch gekennzeichnet, dass die Trägerschicht (510; 610) auf zumindest einer Seite, die dazu vorgesehen ist, gegenüber der aktiven Mittelschicht (532; 632) angeordnet zu werden, metallisiert ist; wobei die Metallisierung mit einem Metall bzw. einer Legierung realisiert ist, das bzw. die mit dem Metall der aktiven Mittelschicht (532; 632) kompatibel ist; wobei die aktive Mittelschicht (532; 632) eine Folie aus Aluminium oder einer Aluminiumlegierung ist und die Metallisierung der Trägerschicht mit einem Metall oder einer Legierung, ausgewählt aus Silber und Aluminium oder einer Kombination der beiden, realisiert ist.

15. Mehrschichtiges Produkt nach Anspruch 13 oder 14, dadurch gekennzeichnet, dass die aktive Mittelschicht (532; 632) aus einer Aluminiumfolie mit etwa 30 µm Dicke und einer Dimension von 600 mm x 600 mm gebildet ist; die Trägerschicht (510; 610) durch eine Polyesterschicht mit einer Dicke von ungefähr 13 µm und einer Dimension von 1100 mm bis 1400 mm x 975 mm bis 725 mm, vorzugsweise auf der Seite gegenüber der metallischen Schicht (532; 632) mit Silber metallisiert, gebildet ist; wobei die Schutzschicht (520; 620) durch eine Polyesterschicht mit einer Dicke von ungefähr 25 µm und einer Dimension von 1000 mm x 700 mm gebildet ist, wobei ein Klebestreifen (512; 612) vorgesehen ist, um die Verbindung dieses mehrschichtigen Produktes mit einem Trägerelement (12), mit der Schutzschicht (620) gegenüber dem zu tragenden Element, wie zum Beispiel dem Körper eines Patienten P, herzustellen.

16. Induktives Sensorelement oder Vorrichtung zur Messung der Einsinktiefe eines zu tragenden Elementes, insbesondere des Körpers eines Patienten, in einer Trägervorrichtung, beispielsweise einer Matratze oder dergleichen, insbesondere einer Trägervorrichtung, die zumindest eine verschlossene oder zum kontrollierten Auslass vorgesehe, biegsame, unter einem vorbestimmten regelbaren Ausgangsaufblasdruck aufblasbare Kammer aufweist, dadurch gekennzeichnet, dass es bzw. sie ein in einem der vorgehenden Ansprüche definiertes mehrschichtiges Produkt aufweist.

17. Vorrichtung zur Verhinderung oder Behandlung von Schorf, dadurch gekennzeichnet, dass sie ein wie in einem der Ansprüche 1 bis 15 definiertes mehrschichtiges Produkt oder ein induktives Sensorelement oder eine Vorrichtung zur Messung der Einsinktiefe eines zu tragenden Elementes nach Anspruch 16 aufweist.

18. Vorrichtung nach Anspruch 17, dadurch gekennzeichnet, dass der Träger eine Matratze (12) ist, die zumindest eine geschlossene oder für einen kontrollierte Auslass vorgesehene, nachgiebige, aufblasbare, durch Einlassen oder Auslassen eines Fluids, zum Beispiel Luft, aufgeblasene oder entleerte Kammer (14) mit einer oberen Fläche (15) und einer unteren Fläche (16) aufweist, wobei das genannte mehrschichtige Produkt mit der oberen Fläche der Kammer (14) verbunden ist, wobei die Vorrichtung weiters Kontrollmittel (40) aufweist, die auf Mittel (18) zur Regelung des Aufblasdruckes der Kammer (14) wirken, um im Laufe des Tragens eine gemessene Position D, die die obere Fläche (15) von der unteren Fläche (16) der Kammer (14) trennt, vorzugsweise bei einem vorbestimmten Abstandswert zu halten, beispielsweise im Wesentlichen konstant, das heißt im Wesentlichen gleich einem Einstellabstand Dc oder innerhalb einer akzeptablen Abweichung hievon.

19. Vorrichtung nach Anspruch 18, dadurch gekennzeichnet, dass die Kontrollmittel (40) eine Steuerzentrale (42) enthalten, die eine elektronische oder elektromechanische zentraleinheit aufweist und einen Speicher hat, der permanent oder intermittierend Signale empfängt, die proportional zum gemessenen Positionswert Dm sind, die durch Meßmittel (30) übertragen werden, und die die gemessenen Positionswerte Dm·mit dem Einstellpositionswert Dc vergleichen, wobei die Steuerzentrale (42) weiters die Mittel (18) zur Regelung des Aufblasdruckes der Kammer steuert, um permanent eine gemessene Position Dm im Wesentlichen gleich dem Einstellabstand Dc oder innerhalb einer akzeptablen Abweichung hievon zu halten.

20. Vorrichtung nach einem der Ansprüche 18 und 19, dadurch gekennzeichnet, dass das oben genannte mehrschichtige Produkt auf der Höhe des Bereiches des Kreuzbeines des Patienten P vorgesehen ist, wobei die Meßmittel (30) ein Impedanzleitelement (34) aufweisen, wie eine Induktionsspule oder Selbstinduktionsspule, die mit der unteren Fläche (15) der Kammer (14) gegenüber dem mehrschichtigen Produkt verbunden ist.

## Claims

1. Use of a multi-layer product without electrodes, characterized in that it comprises an electrically conductive flexible active central layer (532; 632) comprising two main faces of large area, a first face linked to at least one support layer (510; 6610) of a synthetic material, advantageously electrically insulating, having a coefficient of elasticity substantially similar to that of the active central layer (532; 632), and a second face linked to at least one protective second layer (520; 620), protecting notably against abrasion, made of a synthetic material, advantageously electrically insulating, the total thickness of said multi-layer product being predetermined to retain substantially completely the flexibility of the active central layer (532; 632); as an inductive receiving element in a measurement device for measuring the penetration depth to which an element to be supported, for instance the body of a patient, penetrates in a support element, for instance a mattress or the like, preferably the protective layer being located in front of said element to be supported, for instance the body of a patient.

2. The use of claim 1, characterized in that the thickness of the central layer (532; 632) is of at least about 15µm and advantageously between about 20 and about 40 µm, better between about 25 and about 35 µm.

3. The use of claim 1 and 2, characterized in that the thickness of the support layer (510; 610)ranges between about 10 µm and about 15 µm.

4. The use of any of claims 1 to 3, characterized in that the support layer (510; 610) comprises or is made of polyester.

5. The use of one of claims 1 to 4, characterized in that the support layer (510; 610) is metal plated over at least one face that is to be arranged facing the active central layer (532; 632).

6. The use of claim 5, characterized in that the metal plating of the support layer (510; 610) is implemented using a metal or a metal alloy compatible with the metal of the active central layer (532; 632).

7. The use of claim 5 or 6, characterized in that the active central layer (532; 632) comprises a flexible film or foil made of aluminum or of an aluminum alloy, and the metal plating of the support layer is implemented with a metal or a metal alloy selected from silver, aluminum and a combination of both.

8. Use according to any one of the preceding claims, characterized in that the thickness of the protective layer (520; 620) ranges between about 20 µm and about 40 µm, better between about 20 and about 30 µm.

9. Use according to any one of the preceding claims, characterized in that the protective layer (520; 620) comprises or is constituted of polyester.

10. The use according to any one of the preceding claims, characterized in that gluing of said central layer with said support layer and said protective layer is performed with an adhesive having a bonding force that provides high mechanical strength to the multi-layer product with an adhesion capacity that impedes to unstick the multi-layer product without tearing the active central layer.

11. Use according to claim 10, characterized in that said adhesive is an acrylic adhesive.

12. Use according to any one of the preceding claims, characterized in that said multi-layer product is obtained by gluing said active central layer (532; 632) pre-glued onto a support layer comprising a metal plated face; and of a protective layer also pre-glued on the face aimed to be glued onto the active central layer.

13. A multi-layer product without electrodes usable as an inductive sensor element in a measurement device for measuring the depth of penetration to which an element to be supported, for instance the body of a patient, penetrates into a support element, for instance a mattress or the like, characterized in that it comprises an electrically conductive flexible active central layer (532; 632) comprising two main faces of large area, a first face linked to at least one support layer (510; 6610) of a synthetic material, advantageously electrically insulating, having a coefficient of elasticity substantially similar to that of the active central layer (532; 632), and a second face linked to at least one protective second layer (520; 620), protecting notably against abrasion, made of a synthetic material, advantageously electrically insulating, the total thickness of said multi-layer being predetermined to retain substantially completely the flexibility of the active central layer (532; 632); the active central layer (532; 632) being of a size smaller than the size of the support layer (510; 610) and the protective layer (520; 620).

14. The multi-layer product according to claim 13, characterized in that the support layer (510; 610) is metal plated over at least one face aimed to be located in front of the active central layer (532; 632); said metal plating being performed with a metal or an alloy compatible with the metal of the active central layer (532; 632); the active central layer (532; 632) being preferably a foil of aluminum or of an aluminum alloy and the metal plating of the support layer being preferably performed with a metal or an alloy selected from silver and aluminum or a combination of both.

15. The multi-layer product according to claim 13 or 14, characterized in that the active central layer (532, 632) is constituted by an aluminum foil of about 30 µm of thickness having a size of 600 mm x 600 mm; the support layer (510; 610) is constituted by a polyester sheet of a thickness of about 13 µm and having a size of 1100 mm to 1400 mm x 975 mm to 725 mm, preferably metal plated onto the face in front of the metallic layer (532; 632) with silver; the protective layer (520; 620) being constituted by a polyester sheet having a thickness of about 25 µm and having a size of 1000 mm x 700 mm, an adhesive tape (612) being provided to perform the bonding of this multi-layer product to a support element (12) with the protective layer (620) in front of the element to be supported, such as the body of a patient P.

16. An inductive sensor element or a measurement device for measuring the penetration depth to which an element being supported, in particular the body of a patient, penetrates in a support device, for instance a mattress or the like, notably a support device, comprising at least one closed or control-released chamber that is flexible and that is inflatable under an adjustable predetermined initial inflation pressure, characterized in that it comprises a multi-layer product as defined in any one of the preceding claims.

17. A support apparatus for the prevention of treatment of bedsores, characterized in that it comprises a multi-layer product as defined in any one of claims 1 to 15 or an inductive sensor element or a measurement device for measuring the depth of penetration of an element to be supported according to claim 16.

18. Apparatus according to claim 17, characterized in that said support is a mattress (12) comprising at least a closed or control-released chamber (14) that is flexible, inflatable, inflated or deflated by introduction or release of a fluid, for instance air, comprising an upper face (15) and a lower face (16), the multi-layer product being linked to the upper face of the chamber (14), said apparatus comprising additionally control means (40) acting on servo-control means (18) for servo-controlling the inflation pressure of the chamber (14) to maintain, during the support, a measured D position separating the upper face (15) from the lower face (16) of the chamber (14) preferably at a predetermined distance value, for instance substantially constant, namely a value essentially equal to a reference distance Dc, or within an acceptable range of variation thereabout.

19. The apparatus of claim 18, characterized in that said control means (40) comprise a control station (42) comprising an electronic or an electromechanical central processing unit having a memory, which unit continuously or intermittently receives signals that are proportional to the measured distance value Dm as transmitted by said measurement means (30), and compares the measured distance values Dm with the reference distance value Dc, the control station (42) controlling in addition the servo-control means (18) for servo-controlling the inflation pressure of the chamber to obtain permanently a measured position Dm substantially equal to the reference distance Dc or within an acceptable range of variation thereabout.

20. Apparatus according to one of claims 18 and 19, characterized in that the multi-layer product is located at the level of the sacral zone of the patient P, the measuring means (30) comprising an impedance conducting element (34) such as an induction coil, linked to the lower face (15) of the chamber (14) with regard to the multi-layer product.
